# EUROPÄISCHE PATENTSCHRIFT

(11) **EP 3 405 695 B1**
(45) Veröffentlichungstag und Bekanntmachung des Hinweises auf die Patenterteilung: **29.01.2020**
(21) Anmeldenummer: 16819058.5
(22) Anmeldetag: 19.12.2016
(51) Int. Cl.: F16F 15/02, F16F 15/16, F16F 15/20, F16F 7/104

(54) **DREHSCHWINGUNGSDÄMPFUNGSANORDNUNG FÜR EINEN ANTRIEBSSTRANG EINES FAHRZEUGS**
TORSIONAL VIBRATION DAMPING ASSEMBLY FOR A DRIVE TRAIN OF A VEHICLE
ENSEMBLE D'AMORTISSEMENT DE VIBRATIONS DE TORSION POUR TRANSMISSION DE VÉHICULE

(30) Priorität: 22.01.2016 DE 102016200888
(43) Veröffentlichungstag der Anmeldung: 28.11.2018
(73) Patentinhaber: ZF Friedrichshafen AG, 88046 Friedrichshafen (DE)
(72) Erfinder: ORLAMÜNDER, Andreas, 97453 Schonungen (DE); LORENZ, Daniel, 97688 Bad Kissingen (DE); DÖGEL, Thomas, 97720 Nüdlingen (DE); SIEMENS, Kyrill, 97084 Würzburg (DE); WACK, Erwin, 97464 Niederwerrn (DE); DIECKHOFF, Tobias, 97078 Würzburg (DE); TERWART, Markus, 97711 Thundorf (DE); REISCH, Matthias, 88214 Ravensburg (DE); ARZNER, Matthias, 88048 Friedrichshafen (DE)
(86) Internationale Anmeldenummer: PCT/EP2016/081658
(87) Internationale Veröffentlichungsnummer: WO 2017/125221

(56) Entgegenhaltungen:
- DE-A1-102006 061 342

## Beschreibung

Die vorliegende Erfindung betrifft eine Drehschwingungsdämpfungsanordnung für einen Antriebsstrang eines Fahrzeugs, umfassend eine zur Drehung um eine Drehachse anzutreibenden Primärseite und eine über ein Wirkmedium mit der Primärseite zur Drehung um die Drehachse und zur Relativdrehung bezüglich einander gekoppelte Sekundärseite.

Aus der DE 10 2006 061 342 A1 ist eine derartige Drehschwingungsdämpfungsanordnung bekannt, bei der eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität in einer ersten Dämpferfluidkammeranordnung umfasst sowie ein bei Druckerhöhung des ersten Dämpferfluids in der ersten Dämpferfluidkammeranordnung belastetes zweites Dämpferfluid mit höherer Kompressibilität in einer zweiten Dämpferfluidkammeranordnung umfasst, wobei die zweite Dämpferfluidkammeranordnung eine Mehrzahl vorzugsweise im Wesentlichen zylindrischer Kammereinheiten umfasst, die bezüglich der ersten Dämpferfluidkammeranordnung radial außen oder/und radial innen und in Umfangsrichtung aufeinander folgend angeordnet sind, wobei in Zuordnung zu jeder Kammereinheit ein das erste Dämpferfluid von dem zweiten Dämpferfluid trennendes und bei Druckveränderung in der Kammereinheit im Wesentlichen radial verlagerbares Trennelement vorgesehen ist. Der Vorteil dieses Schwingungsreduzierungssystems ist die weitgehend beliebig niedrig einstellbare Steifigkeit, die eine sehr gute Entkopplung der Drehschwingungen des Verbrennungsmotors ermöglicht. Jedoch ergibt sich der Nachteil, dass in einem unverzweigten Kettenschwinger trotz niedrigster Steifigkeit die Drehschwingungen nicht hinreichend reduziert werden können, da selbst bei einem Absenken nahe 0 eine Seitenwellensteifigkeit des Fahrzeuges, die zum Restantriebsstrang gehört, das Schwingungsverhalten des gesamten Antriebsstrangs definiert.

Es ist die Aufgabe der vorliegenden Erfindung, eine Drehschwingungsdämpfungsanordnung für einen Antriebsstrang eines Fahrzeugs vorzusehen, mit welcher bei kompakter Bauart und geringem Masseträgheitsmoment eine effiziente Minderung von Drehschwingungen in dem in einem Antriebsstrang übertragenen Drehmoment erreicht werden kann.

Erfindungsgemäß wird diese Aufgabe gelöst durch eine Drehschwingungsdämpfungsanordnung für einen Antriebsstrang eines Fahrzeugs, umfassend eine um eine Drehachse A drehbare Verdrehmassenanordnung und eine außerhalb der Verdrehmassenanordnung angeordnete und mit der Verdrehmassenanordnung wirkverbundene und zur Drehachse A drehfesten Dämpfungsanordnung, wobei die Verdrehmassenanordnung ein um die Drehachse A drehbares Primärträgheitselement und ein zu dem Primärträgheitselement relativ verdrehbares Sekundärträgheitselement und eine Verdrängereinheit umfasst, wobei die Verdrängereinheit einerseits mit dem Primärträgheitselement und andererseits mit dem Sekundärträgheitselement wirkverbunden ist, wobei die Verdrängereinheit einen Arbeitsraum umfasst und wobei durch eine relative Verdrehung des Primärträgheitselements zu dem Sekundärträgheitselement aus einer Ruhelage ein Volumen V1 des Arbeitsraum verändert wird, wobei die Dämpfungsanordnung einen Nehmerzylinder mit einem Arbeitsraum mit einem Volume V2 umfasst und wobei der Arbeitsraum des Nehmerzylinders mit dem Arbeitsraum der Verdrängereinheit wirkverbunden ist, wobei die Dämpfungsanordnung eine Steifigkeitsanordnung und eine Tilgermasse umfasst, wobei der Nehmerzylinder der Dämpfungsanordnung mittels einer Steifigkeitsanordnung mit der Tilgermasse wirkverbunden ist. Durch eine Trennung der Verdrehmassenanordnung, also dem rotierenden System, und der Dämpfungsanordnung, dem drehfesten System, kann die Verdrehmassenanordnung, kompakt und folglich mit einem geringen Massenträgheitsmoment ausgebildet werden, was sich vorteilhaft auf ein spontanes Ansprechverhalten des Antriebsaggregates auswirken kann. Dabei kann die Verdrängereinheit beispielsweise aus einem tangential angeordneten Druckzylinder oder einem Rotationskolbenverdränger, wie einem Flügelzellenverdränger oder einem Zahnradverdränger bestehen. Flügelzellenverdränger haben einen endlichen Verdrehwinkel und Zahnradverdränger einen unendlichen Verdrehwinkel. Dabei ist die Funktion der Drehschwingungsdämpfungsanordnung wie folgt. Von einem Antriebsaggregat, vornehmlich ein Verbrennungsmotor, wird ein Drehmoment mit darin enthaltenen Drehschwingungen an die Primärmassenträgheit weiter geleitet. Bei der Übertragung des Drehmomentes mit den enthaltenen Drehschwingungen an die Sekundärmassenträgheit wandelt die Verdrängereinheit, die vornehmlich aus einem Gehäuseelement, einem Verdrängerkolben und einem Arbeitsraum mit einem Volumen V1 besteht, das Drehmoment in vornehmlich Fluiddruck, wenn als ein Wirkmedium eine Flüssigkeit verwendet wird, um. Über eine Verbindungsleitung und eine Drehdurchführung wird der Fluiddruck von der rotierenden Verdrehmassenanordnung an die drehfeste Dämpfungsanordnung, genauer hier an einen Nehmerzylinder, vornehmlich bestehend aus einem Gehäuseelement, einem Verdrängerkolben und einem Arbeitsraum mit einem Volumen V2 weiter geleitet. Der Nehmerzylinder kann dabei über eine Steifigkeitsanordnung mit einer Tilgermasse verbunden sein. Der Fluiddruck bewirkt nun, dass der Verdrängerkolben mit der Wirkrichtung des Fluiddruckes bewegt wird. Da der Verdrängerkolben wiederum über die Steifigkeitsanordnung mit der Tilgermasse verbunden ist, erfolgt je nach Abstimmung eine gegenphasige Dämpfung der Drehschwingungen und es werden die Drehschwingungen zumindest teilweise ausgelöscht. Weiter kann eine Versorgungspumpe, wie eine Öldruckpumpe und ein Druckspeicher an den Fluiddruck angeschlossen werden um zum einen Leckageausgleich zu tätigen oder auch zum anderen um durch eine Druckänderung eine Lastpunktverstellung und damit eine aktive Überlagerung eines periodischen Druckverlaufes zu erreichen. Hierzu ist eine Steuereinrichtung und eine Regelungseinrichtung erforderlich, die mit dem Fluiddruck in Wirkverbindung zu setzen ist.

Eine weitere vorteilhafte Ausführungsform sieht vor, dass die Steifigkeitsanordnung der Dämpfungsanordnung einen Energiespeicher umfasst, wobei der Energiespeicher ein elastisch verformbares Element oder ein gaskompressibles Element ist. Dabei kann als elastisch verformbares Element beispielsweise eine Stahlfeder oder als gaskompressibles Element, beispielsweise ein Stickoxidgas als Gasfeder verwendet werden. Dabei ist die Gasfeder vorteilhaft, da ihre Kraft-Weg Kennlinie progressiv ist und über den Weg eine veränderliche Steifigkeit besitzt.

Eine weitere günstige Ausführungsform sieht vor, dass sich im Arbeitsraum (61) der Verdrängereinheit und im Arbeitsraum des Nehmerzylinders ein Wirkmedium aus einem viskosem Medium oder ein Gas oder eine Kombination aus einem viskosem Medium und einem Gas befindet. Hierbei ist ein viskoses Medium, wie beispielsweise eine Hydraulikflüssigkeit besonders vorteilhaft, da Flüssigkeiten nicht kompressibel sind und sich als Wirkmedium zur Weiterleitung in Form von Druckimpulsen vorteilhaft eignen. Somit können die Wechselmomente vom Antriebsaggregat, die von der Verdrängereinheit als Wechseldrücke umgewandelt werden über das Wirkmedium, hier also eine Hydraulikflüssigkeit, direkt an den Nehmerzylinder weitergeleitet werden können. Da der Nehmerzylinder wiederum in Wirkverbindung mit der Tilgermassenanordnung steht, kann hierdurch eine vorteilhafte Schwingungsreduzierung erzielt werden.

Eine weitere günstige Ausgestaltung sieht vor, dass die Verdrehmassenanordnung eine feste Steifigkeit mit einem Energiespeicher umfasst, wobei das Primärträgheitselement entgegen der Wirkung des Energiespeichers relativ zu dem Sekundärträgheitselement verdrehbar ist. Dabei kann als Energiespeicher eine Gasfeder oder ein elastisch verformbares Element, wie eine Stahlfeder, eine Kunststofffeder oder ein bekanntes vergleichbares elastisch verformbares Element verwendet werden.

Dabei kann der Energiespeicher, der zwischen dem Primärträgheitselement und dem Sekundärträgheitselement verbaut ist, parallel oder seriell zu der Verdrängereinheit angeordnet werden.

Wie bereits vorangehend beschrieben kann als Energiespeicher der Steifigkeitsanordnung, die zwischen dem Primärträgheitselement und dem Sekundärträgheitselement angeordnet ist ein elastisch verformbares Element oder ein gaskompressibles Element verwendet werden.

Eine weitere Ausführungsform sieht vor, dass der Arbeitsraum der Verdrängereinheit mittels einer Verbindungsleitung mit einem Arbeitsraum 71 des Nehmerzylinders wirkverbunden ist. Dabei ist die Verbindungsleitung so auszuführen, dass diese das Wirkmedium, also die Flüssigkeit, oder das Gas oder eine Kombination aus Flüssigkeit und Gas mit einem geringen Pumpverlust aufnimmt. Dies bedeutet, dass die Wechseldrücke des Wirkmediums nicht eine elastische Verformung der Verbindungsleitung verursachen sollen, was sich nachteilig auf das Ansteuerverhalten der Tilgermassenanordnung auswirken könnte und somit auch nachteilig für die Schwingungsdämpfungs sein kann.

Eine weitere vorteilhafte Ausgestaltung sieht vor, dass die Verbindungsleitung eine Drehdurchführung umfasst, wobei die Drehdurchführung den um die Drehachse A drehbaren Arbeitsraum der Verdrängereinheit und den zur Drehachse A drehfesten Arbeitsraum des Nehmerzylinders flüssigkeitsdicht und oder gasdicht und zueinander verdrehbar verbindet.

Weiter kann es vorteilhaft sein, dass die Dämpfungsanordnung eine Versorgungspumpe und oder einen Druckspeicher und oder eine Steuerregelungseinheit umfasst, wobei die Versorgungspumpe und oder der Druckspeicher und oder die Steuerregelungseinheit mit dem Arbeitsraum des Nehmerzylinders wirkverbunden ist. Dies kann zum einen vorteilhaft sein um eine Leckage auszugleichen und oder um eine Lastpunktverschiebung der Tilgermassenanordnung zu erreichen. Hierzu kann der Druck des Wirkmediums durch die Versorgungspumpe und den Druckspeicher verändert werden. Hierzu ist auch Steuerregelungseinheit vorteilhaft, die den notwendigen Druck des Wirkmediums regeln kann. Dabei kann die Versorgungspumpe vorteilhaft eine Öldruckpumpe oder ein Kompressor sein. Die Steuerregelungseinheit umfasst vorteilhaft Sensoren zur Druckerkennung, Druckregelventile und Druckschaltventile.

Weiter kann der Nehmerzylinder ein Lastfederelement umfassen, wobei das Lastfederelement entgegen einer Wirkungsrichtung einer Volumenänderung V2 des Arbeitsraumes des Nehmerzylinders wirkt. Hierdurch kann eine zusätzlich Betriebspunktverschiebung der wirksamen Tilgersteifigkeit ermöglicht werden, indem der Fluiddruck des Wirkmediums in der Verdrängereinheit und im Nehmerzylinder entgegen der Lastfeder erhöht wird. Diese Lastfeder kann als eine Stahlfeder oder auch als eine Gasfeder ausgeführt sein. Durch das Wechselmoment an dem Verdränger wird über den Wechseldruck auf den Nehmerzylinder die zur Drehachse A drehfeste Tilgermassenanordnung bestehend aus der Tilgermasse und der Tilgersteifigkeitsanordnung angeregt. Bei geeigneter Abstimmung wirkt die Tilgermassenanordnung gegenphasig und löscht so die Schwingungen zumindest teilweise aus.

In einer weiteren vorteilhaften Ausführungsform umfasst die Verdrehmassenanordnung eine Tilgerbaugruppe, wobei die Tilgerbaugruppe mit dem Primärträgheitselement oder mit dem Sekundärträgheitselement wirkverbunden ist. Dabei kann die Tilgerbaugruppe als Pendel im Fliehkraftfeld ausgeführt sein. Das kann nach dem bekannten Prinzip von Salomon ausgeführt sein. Es kann aber auch ein Massependel nach dem bekannten Prinzip von Sarazin oder jedes funktional geeignete Massependel verwendet werden. Grundsätzlich sind die bekannten Massependel nach dem Prinzip von Salomon oder Sarazin von ihrer funktionsweise gleich. Es kann hier auch von einem Sarazintilger und Salomontilger gesprochen werden. Beide Massependel beruhen auf dem Prinzip der Massenverlagerung gegenüber seinem Trägerteil auf Grund sich verändernder Drehzahlen. Der Salomontilger ist bezüglich des radialen Bauraumbedarfs günstiger. Ein weiterer Vorteil beim Salomontilger ist die einfache Anpassung der Abstimmordnung durch eine entsprechende Auslegung einer Bahngeometrie in der sich das Massependel bewegt. Beim Sarazintilger muss dazu der Schwerpunktradius der Massekörper verändert werden z.B. durch eine federnd gelagerte Masse die mit steigender Drehzahl nach radial außen wandert. Es kann aber auch jede andere Bauart an Fliehkraftpendel, beispielsweise eine Auslenkungsmassenpendeleinheit, bestehend aus einer Auslenkungsmasse und einem elastischen Rückstellelement mit oder ohne variable Einspannlänge, wobei sich diese auch unter Fliehkrafteinwirkung verändern kann, verwendet werden.

Die vorliegende Erfindung wird nachfolgend mit Bezug auf die beiliegenden Figuren detailliert beschrieben. Es zeigt:
Fig. 1 eine Drehschwingungsdämpfungsanordnung mit einer Verdrehmassenanordnung und Dämpfungsanordnung
Fig. 2 eine Drehschwingungsdämpfungsanordnung wie in Figur 1, jedoch mit einer Lastfeder im Nehmerzylinder
Fig. 3 eine Drehschwingungsdämpfungsanordnung wie in Figur 2, jedoch mit einer Reihenschaltung von Verdrängereinheit und fester Steifigkeit
Fig. 4 eine Drehschwingungsdämpfungsanordnung wie in Figur 3, jedoch ohne die feste Steifigkeit, jedoch mit einem Fliehkraftpendel.

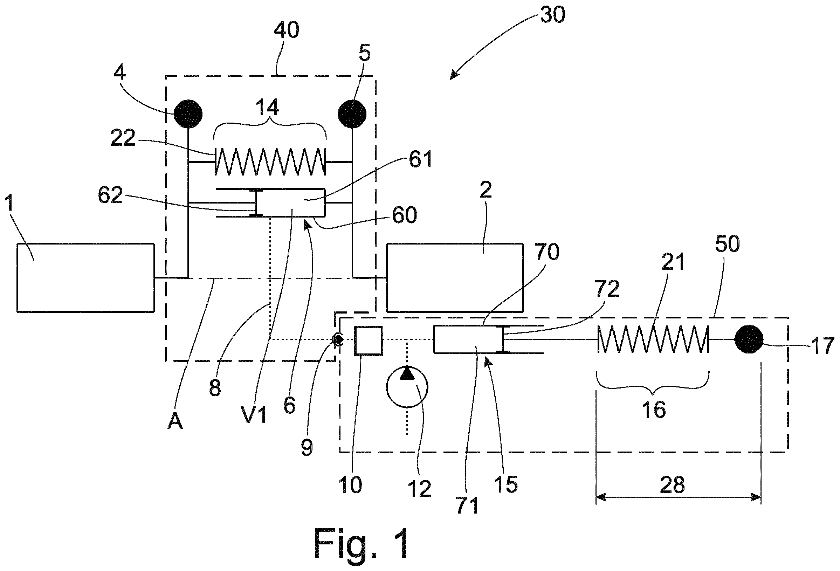

Die Figur 1 zeigt eine Drehschwingungsdämpfungsanordnung 30, die zwischen einem Antriebsaggregat 1 und einem Getriebeaggregat 2 verbaut ist. Dabei besteht hier die Drehschwingungsdämpfungsanordnung 30 vornehmlich aus einer Verdrehmassenanordnung 40, die um die Drehachse A drehbar ist und einer Dämpfungsanordnung 50, die nicht um die Drehachse A drehbar ist, sondern ortsfest, beispielsweise in einem Kofferraum eines Kraftfahrzeuges, hier nicht dargestellt, positioniert ist. Die Verdrehmassenanordnung 40 besteht hier aus einem Primärträgheitselement 4 und einem Sekundärträgheitselement 5, die beide zueinander gegen die Wirkrichtung einer Verdrängereinheit 6 und einer parallel dazu geschalteten festen Steifigkeit 14 verdrehbar sind. Der Verdränger besteht hier unter anderem aus einem Gehäuseelement 60, einem Verdrängerkolben 62 und einem Arbeitsraum mit einem Volumen V1. Dabei ist der Verdrängerkolben 62 mit dem Primärträgheitselement 4 und das Gehäuseelement 60 mit dem Sekundärträgheitselement 5 verbunden. Verdreht sich nun das Primärträgheitselement 4 zu dem Sekundärträgheitselement 5, fährt der Verdrängerkolben 62 in den Arbeitsraum 61 ein und verdrängt ein im Arbeitsraum 61 befindliches Wirkmedium 63, das vornehmlich als ein Fluid, wie Hydrauliköl, oder ein Gas, oder eine Kombination aus Hydrauliköl und Gas, ausgeführt ist. Das verdrängte Wirkmedium 63 wird dabei durch eine mit dem Arbeitsraum 61 der Verdrängereinheit 6 verbundenen Verbindungsleitung 8 zu einem Arbeitsraum 71 mit einem Volumen V2 eines Nehmerzylinder 15 der Dämpfungsanordnung 50 geleitet. Dabei wird die Verbindungsleitung 8 durch eine Drehdurchführung 9 in einen drehbaren Teil und einen feststehenden Teil unterteilt, da die Verdrängereinheit 6 um die Drehachse A drehbar ist, jedoch der Nehmerzylinder 15 ortsfest und damit nicht um die Drehachse A drehbar ist. Der Nehmerzylinder besteht hier unter anderem aus einem Gehäuseelement 70 und einem Verdrängerkolben 72. Dabei ist der Verdrängerkolben 72 mittels einer Steifigkeitsanordnung 16, die hier als Energiespeicher 21 in Form einer Stahlfeder ausgeführt ist, mit einer Tilgermasse 17 verbunden. Diese Anordnung von Steifigkeitsanordnung 16 und Tilgermasse kann auch als eine Tilgermassenanordnung 28, hier in Form eines Festfrequenztilgers, bezeichnet werden. Wird nun im Arbeitsraum 61 das Wirkmedium 63 verdrängt, so gelangt dieses über die Verbindungsleitung 8 in den Arbeitsraum 71 des Nehmerzylinders 15 und verdrängt den Verdrängerkolben 72, der wiederum die Tilgermassenanordnung 28 ansteuert. Diese Anordnung ist besonders vorteilhaft, da die eigentliche Tilgerfunktion aus der rotierenden Verdrehmassenanordnung ausgelagert ist, so dass das Massenträgheitsmoment der Verdrehmassenanordnung gering gehalten werden kann, was sich wiederum vorteilhaft auf ein spontanes Ansprechverhalten des Antriebsaggregates auswirken kann.

Eine Versorgungspumpe 12, beispielsweise eine Öldruckpumpe oder ein Kompressor, dient für einen Leckageausgleich oder auch zu einer aktiven Überlagerung eines periodischen Druckverlaufes, der vorzugsweise gegenphasig wirkt. Hierzu sind jedoch eine Steuerregelungseinheit 10 erforderlich, die mit dem Wirkmedium 63 in Wirkverbindung steht und Einfluss auf den Druck des Wirkmediums nehmen kann.

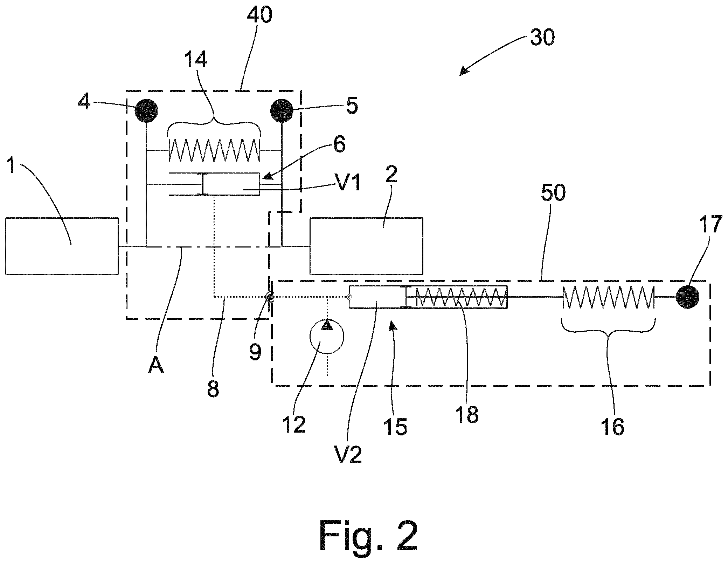

Die Figur 2 zeigt eine Drehschwingungsdämpfungsanordnung 30 wie in Figur 1 gezeigt, jedoch mit einer Lastfeder 18, die auf den Verdrängerkolben 72 entgegen der Wirkrichtung des Wirkmediums 63 im Arbeitsraum 71 des Nehmerzylinders 15 wirkt. Dabei kann die Lastfeder 18 als ein elastisch verformbares Element, wie beispielsweise eine Stahlfeder, hier dargestellt, oder als eine Gasfeder, hier nicht dargestellt, ausgeführt sein.

Hierdurch kann eine zusätzliche Betriebspunktverschiebung der wirksamen Steifigkeitsanordnung 16 der Tilgermasse 17 erreicht werden, indem ein wirksamer Druck des Wirkmediums 63 entgegen der Lastfeder 18 durch die Versorgungspumpe 12 verändert wird. Liegt nun ein Wechselmoment an der Verdrehmassenanordnung 40, hervorgerufen durch das Antriebsaggregat 1, vornehmlich ein Verbrennungsmotor, an, so wird dieses Wechselmoment an der Verdrängereinheit 6 in einen Wechseldruck umgewandelt und auf den Nehmerzylinder 15 übertragen, der wiederum die Tilgermassenanordnung 28, hier bestehend aus der Steifigkeitsanordnung 16 und der Tilgermasse 17 anregt. Bei geeigneter Abstimmung wirkt die Tilgermassenanordnung 28 gegenphasig und löscht so die Schwingungen zumindest teilweise aus.

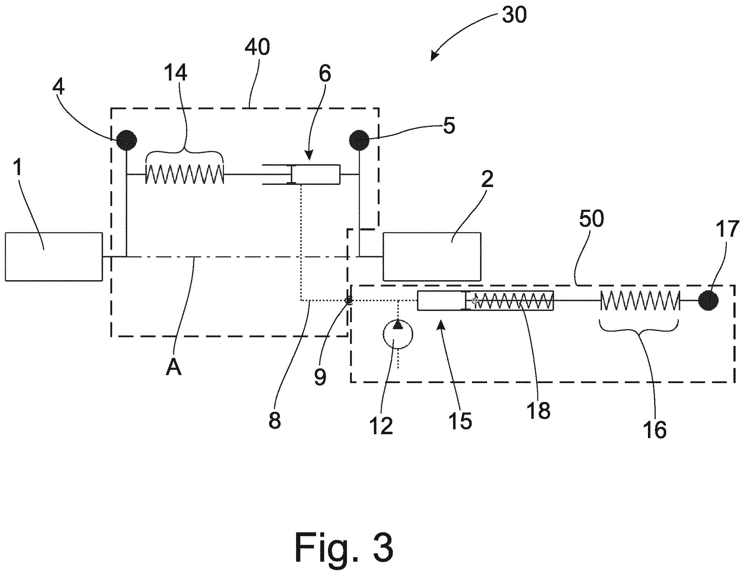

Die Figur 3 zeigt eine Drehschwingungsdämpfungsanordnung 30, wie in Figur 2 gezeigt jedoch mit einer Reihenschaltung von der Verdrängereinheit 6 und der festen Steifigkeit 14. Durch die Reihenschaltung der Verdrängereinheit 6 zu der festen Steifigkeit 14 wirkt die Tilgermassenanordnung 28 aus dem stehenden System auslöschend auf das Wechselmoment, das über die feste Steifigkeit 14 eingeleitet wird. Die Versorgungspumpe 12, vornehmlich hier als eine Öldruckpumpe ausgeführt, dient zum Leckageausgleich oder zur aktiven Überlagerung eines periodischen Druckverlaufes, der vorzugsweise gegenphasig wirkt.
Auch hier eine Betriebspunktverschiebung möglich, da der Nehmerzylinder 15 ein Lastfederelement 18 aufweist.

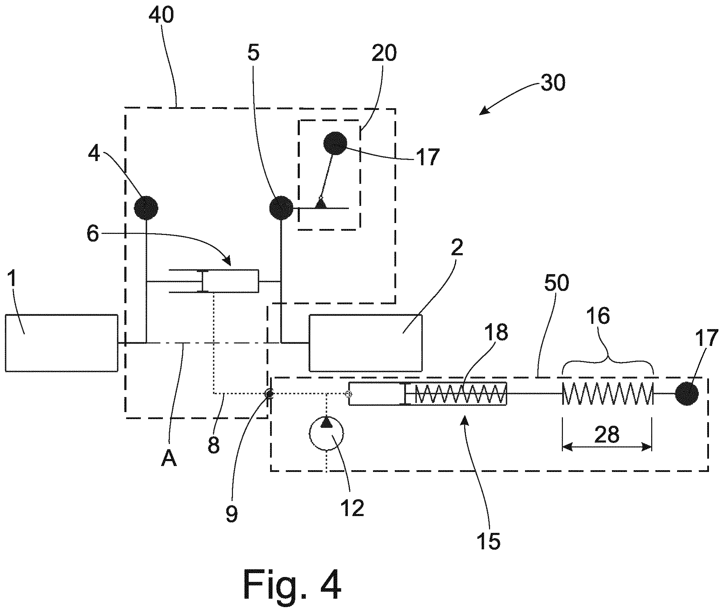

Die Figur 4 zeigt eine Drehschwingungsdämpfungsanordnung 30, wie in Figur 3 dargestellt, jedoch nur mit dem Verdränger 6 zwischen dem Primärträgheitselement 4 und dem Sekundärträgheitselement 5, also ohne die feste Steifigkeit 14, jedoch mit einer Tilgerbaugruppe 20 an dem Sekundärträgheitselement 5, die hier als ein Fliehkraftpendel ausgeführt ist. Dabei soll diese Ausführungsform nur beispielhaft verstanden werden. Es sind hierfür alle bekannten Fliehkraftpendel, aber auch Festfrequenztilger, bestehend aus einer Steifigkeit und einer Masse möglich. Auch bei dieser Ausführungsform ist an dem Nehmerzylinder 15 eine zur Drehachse A drehfeste Tilgermasse 17 mit Steifigkeitsanordnung 16 angebracht, der der Steifigkeit des Lastfederelements 18 einen gegenphasigen Druckverlauf aufprägt und die Schwingungen zumindest teilweise auslöscht. Bei einer geeigneter Abstimmung, beispielsweise auf die hauptanregende Ordnung oder Frequenz des Antriebsaggregates 1, hier der Verbrennungsmotors, ist der Regelungsaufwand des Systems minimal. Aufgrund einer niedrigen Steifigkeit kann eine Tilgermasse 29 der Tilgerbaugruppe kleiner gewählt werden, da die Vorentkopplung durch die externe Feder 18 aufgrund der niedrigen Steifigkeit sehr gut ist.

### Bezugszeichen

- 1: Antriebsaggregat
- 2: Getriebeaggregat
- 4: Primärträgheitselement
- 5: Sekundärträgheitselement
- 6: Verdrängereinheit
- 8: Verbindungsleitung
- 9: Drehdurchführung
- 10: Steuerregelungseinheit
- 11: Druckspeicher
- 12: Versorgungspumpe
- 14: feste Steifigkeit
- 15: Nehmerzylinder
- 16: Steifigkeitsanordnung
- 17: Tilgermasse
- 18: Lastfederelement
- 20: Tilgerbaugruppe
- 21: Energiespeicher
- 22: Energiespeicher
- 23: Energiespeicher
- 24: Energiespeicher
- 28: Tilgermassenanordnung
- 29: Tilgermasse
- 30: Drehschwingungsdämpfungsanordnung
- 40: Verdrehmassenanordnung
- 50: Dämpfungsanordnung
- 60: Gehäuseelement
- 61: Arbeitsraum
- 62: Verdrängerkolben
- 63: Wirkmedium
- 70: Gehäuseelement
- 71: Arbeitsraum
- 72: Verdrängerkolben
- 81: Arbeitsraum
- 83: gaskompressibles Element
- 84: elastisch verformbares Element
- 90: Federanordnung
- V1: Volumen
- V2: Volumen
- A: Drehachse

## Patentansprüche

1. Drehschwingungsdämpfungsanordnung (30) für einen Antriebsstrang eines Kraftfahrzeugs, umfassend
eine um eine Drehachse A drehbare Verdrehmassenanordnung (40) und eine außerhalb der Verdrehmassenanordnung (40) angeordnete und mit der Verdrehmassenanordnung (40) wirkverbundene und zur Drehachse A drehfesten Dämpfungsanordnung (50),
wobei die Verdrehmassenanordnung (40) ein um die Drehachse A drehbares Primärträgheitselement (4) und ein zu dem Primärträgheitselement (4) relativ verdrehbares Sekundärträgheitselement (5) und eine Verdrängereinheit (6) umfasst, wobei die Verdrängereinheit (6) einerseits mit dem Primärträgheitselement (4) und andererseits mit dem Sekundärträgheitselement (5) wirkverbunden ist,
wobei die Verdrängereinheit (6) einen Arbeitsraum 61 umfasst und wobei durch eine relative Verdrehung des Primärträgheitselements (4) zu dem Sekundärträgheitselement (5) aus einer Ruhelage ein Volumen V1 des Arbeitsraum (61) verändert wird,
wobei die Dämpfungsanordnung (50) einen Nehmerzylinder (15) mit einem Arbeitsraum (71) mit einem Volume V2 umfasst und wobei der Arbeitsraum (71) des Nehmerzylinders (15) mit dem Arbeitsraum (61) der Verdrängereinheit (6) wirkverbunden ist,
**dadurch gekennzeichnet, dass**
die Dämpfungsanordnung (50) eine Steifigkeitsanordnung (16) und eine Tilgermasse (17) umfasst, wobei der Nehmerzylinder (15) der Dämpfungsanordnung (50) mittels der Steifigkeitsanordnung (16) mit der Tilgermasse (17) wirkverbunden ist.

2. Drehschwingungsdämpfungsanordnung (30) nach Anspruch 1, **dadurch gekennzeichnet, dass** die Steifigkeitsanordnung (16) der Dämpfungsanordnung (50) einen Energiespeicher (21) umfasst, wobei der Energiespeicher (21) ein elastisch verformbares Element oder ein gaskompressibles Element ist.

3. Drehschwingungsdämpfungsanordnung (30) nach Anspruch 1 oder 2, **dadurch gekennzeichnet, dass** sich im Arbeitsraum (61) der Verdrängereinheit (6) und im Arbeitsraum (71) des Nehmerzylinders (15) ein Wirkmedium (63) bestehend aus einem viskoses Medium oder einem Gas oder eine Kombination aus einem viskosem Medium und einem Gas befindet.

4. Drehschwingungsdämpfungsanordnung (30) nach einem der vorangehenden Ansprüche, **dadurch gekennzeichnet, dass** die Verdrehmassenanordnung (40) eine feste Steifigkeit (14) mit einem Energiespeicher (22) umfasst, wobei das Primärträgheitselement (4) entgegen der Wirkung des Energiespeichers (22) relativ zu dem Sekundärträgheitselement (5) verdrehbar ist.

5. Drehschwingungsdämpfungsanordnung (30) nach Anspruch 4, **dadurch gekennzeichnet, dass** der Energiespeicher (22) der Verdrehmassenanordnung (40) parallel oder seriell zu der Verdrängereinheit (6) angeordnet ist.

6. Drehschwingungsdämpfungsanordnung (30) nach einem der Ansprüche 4 oder 5, **dadurch gekennzeichnet, dass** der Energiespeicher der Verdrehmassenanordnung (40) ein elastisch verformbares Element oder ein gaskompressibles Element ist.

7. Drehschwingungsdämpfungsanordnung (30) nach einem der vorangehenden Ansprüche, **dadurch gekennzeichnet, dass** der Arbeitsraum (61) der Verdrängereinheit (6) mittels einer Verbindungsleitung (8) mit einem Arbeitsraum 71 des Nehmerzylinders (15) wirkverbunden ist.

8. Drehschwingungsdämpfungsanordnung (30) nach einem der vorangehenden Ansprüche, **dadurch gekennzeichnet, dass** die Verbindungsleitung (8) eine Drehdurchführung (9) umfasst, wobei die Drehdurchführung (9) den um die Drehachse A drehbaren Arbeitsraum (61) der Verdrängereinheit (6) und den zur Drehachse A drehfesten Arbeitsraum (71) des Nehmerzylinders (15) flüssigkeitsdicht und oder gasdicht und zueinander verdrehbar verbindet.

9. Drehschwingungsdämpfungsanordnung (30) nach einem der vorangehenden Ansprüche, **dadurch gekennzeichnet, dass** die Dämpfungsanordnung (50) eine Versorgungspumpe (12) und oder einen Druckspeicher (11) und / oder eine Steuerregelungseinheit (10) umfasst, umfasst, wobei die Versorgungspumpe (12) und oder der Druckspeicher (11) und / oder die Steuerregelungseinheit (10) mit dem Arbeitsraum (71) des Nehmerzylinders (15) wirkverbunden ist.

10. Drehschwingungsdämpfungsanordnung (30) nach einem der vorangehenden Ansprüche, **dadurch gekennzeichnet, dass** der Nehmerzylinder (15) ein Lastfederelement (18) umfasst, wobei das Lastfederelement (18) entgegen einer Wirkungsrichtung einer Volumenänderung V2 des Arbeitsraumes (71) des Nehmerzylinders (15) wirkt.

11. Drehschwingungsdämpfungsanordnung (30) nach einem der vorangehenden Ansprüche, **dadurch gekennzeichnet, dass** die Verdrehmassenanordnung (40) eine Tilgerbaugruppe (20) umfasst, wobei die Tilgerbaugruppe mit dem Primärträgheitselement (4) oder mit dem Sekundärträgheitselement (5) wirkverbunden ist.

## Claims

1. Rotary vibration damping arrangement (30) for a drivetrain of a motor vehicle, comprising
a rotational mass arrangement (40), which is rotatable about an axis of rotation A, and a damping arrangement (50), which is arranged outside the rotational mass arrangement (40) and is operatively connected to the rotational mass arrangement (40) and is rotationally fixed with respect to the axis of rotation A,
wherein the rotational mass arrangement (40) comprises a primary inertia element (4), which is rotatable about the axis of rotation A, and a secondary inertia element (5), which is relatively rotatable with respect to the primary inertia element (4), and a displacing unit (6), wherein the displacing unit (6) is operatively connected to the primary inertia element (4) on one side and to the secondary inertia element (5) on the other side,
wherein the displacing unit (6) comprises a working chamber (61), and wherein a volume V1 of the working chamber (61) is changed by a relative rotation of the primary inertia element (4) with respect to the secondary inertia element (5) from a rest position,
wherein the damping arrangement (50) comprises a slave cylinder (15) having a working chamber (71) with a volume V2, and wherein the working chamber (71) of the slave cylinder (15) is operatively connected to the working chamber (61) of the displacing unit (6),
**characterized in that**
the damping arrangement (50) comprises a stiffness arrangement (16) and an absorber mass (17), wherein the slave cylinder (15) of the damping arrangement (50) is operatively connected to the absorber mass (17) by means of the stiffness arrangement (16).

2. Rotary vibration damping arrangement (30) according to Claim 1, **characterized in that** the stiffness arrangement (16) of the damping arrangement (50) comprises an energy accumulator (21), wherein the energy accumulator (21) is an elastically deformable element or a compressible gas element.

3. Rotary vibration damping arrangement (30) according to Claim 1 or 2, **characterized in that** an active medium (63) consisting of a viscous medium or a gas or a combination of a viscous medium and a gas is situated in the working chamber (61) of the displacing unit (6) and in the working chamber (71) of the slave cylinder (15).

4. Rotary vibration damping arrangement (30) according to one of the preceding claims, **characterized in that** the rotational mass arrangement (40) comprises a fixed stiffness means (14) having an energy accumulator (22), wherein the primary inertia element (4) is rotatable relative to the secondary inertia element (5) counter to the action of the energy accumulator (22).

5. Rotary vibration damping arrangement (30) according to Claim 4, **characterized in that** the energy accumulator (22) of the rotational mass arrangement (40) is arranged in parallel or in series with the displacing unit (6).

6. Rotary vibration damping arrangement (30) according to either of Claims 4 and 5, **characterized in that** the energy accumulator of the rotational mass arrangement (40) is an elastically deformable element or a compressible gas element.

7. Rotary vibration damping arrangement (30) according to one of the preceding claims, **characterized in that** the working chamber (61) of the displacing unit (6) is operatively connected to a working chamber 71 of the slave cylinder (15) by means of a connecting line (8).

8. Rotary vibration damping arrangement (30) according to one of the preceding claims, **characterized in that** the connecting line (8) comprises a rotary leadthrough (9), wherein the rotary leadthrough (9) connects the working chamber (61), rotatable about the axis of rotation A, of the displacing unit (6) and the working chamber (71), rotationally fixed with respect to the axis of rotation A, of the slave cylinder (15) in a liquid-tight and/or gas-tight manner and in a manner rotatable with respect to one another.

9. Rotary vibration damping arrangement (30) according to one of the preceding claims, **characterized in that** the damping arrangement (50) comprises a supply pump (12) and/or a pressure accumulator (11) and/or a control/regulating unit (10), wherein the supply pump (12) and/or the pressure accumulator (11) and/or the control/regulating unit (10) are/is operatively connected to the working chamber (71) of the slave cylinder (15).

10. Rotary vibration damping arrangement (30) according to one of the preceding claims, **characterized in that** the slave cylinder (15) comprises a load spring element (18), wherein the load spring element (18) acts counter to a direction of action for a change in volume V2 of the working chamber (71) of the slave cylinder (15).

11. Rotary vibration damping arrangement (30) according to one of the preceding claims, **characterized in that** the rotational mass arrangement (40) comprises an absorber assembly (20), wherein the absorber assembly is operatively connected to the primary inertia element (4) or to the secondary inertia element (5).

## Revendications

1. Agencement d'amortissement d'oscillations de torsion (30) pour une chaîne cinématique d'un véhicule automobile, comprenant :
un agencement de masse de rotation (40) pouvant tourner autour d'un axe de rotation A et un agencement d'amortissement (50) disposé à l'extérieur de l'agencement de masse de rotation (40), en liaison fonctionnelle avec l'agencement de masse de rotation (40) et solidaire en rotation par rapport à l'axe de rotation A,
l'agencement de masse de rotation (40) comprenant un élément d'inertie primaire (4) pouvant tourner autour de l'axe de rotation A et un élément d'inertie secondaire (5) pouvant tourner par rapport à l'élément d'inertie primaire (4), et une unité de déplacement (6), l'unité de déplacement (6) étant en liaison fonctionnelle d'une part avec l'élément d'inertie primaire (4) et d'autre part avec l'élément d'inertie secondaire (5),
l'unité de déplacement (6) comprenant un espace de travail (61) et un volume V1 de l'espace de travail (61) étant modifié par une rotation relative de l'élément d'inertie primaire (4) par rapport à l'élément d'inertie secondaire (5) à partir d'une position de repos,
l'agencement d'amortissement (50) comprenant un cylindre récepteur (15) avec un espace de travail (71) ayant un volume V2 et l'espace de travail (71) du cylindre récepteur (15) étant en liaison fonctionnelle avec l'espace de travail (61) de l'unité de déplacement (6),
**caractérisé en ce que**
l'agencement d'amortissement (50) comprend un agencement de rigidification (16) et une masse d'amortissement (17), le cylindre récepteur (15) de l'agencement d'amortissement (50) étant en liaison fonctionnelle avec la masse d'amortissement (17) au moyen de l'agencement de rigidification (16).

2. Agencement d'amortissement d'oscillations de torsion (30) selon la revendication 1, **caractérisé en ce que** l'agencement de rigidification (16) de l'agencement d'amortissement (50) comprend un accumulateur d'énergie (21), l'accumulateur d'énergie (21) étant un élément déformable élastiquement ou un élément à gaz compressible.

3. Agencement d'amortissement d'oscillations de torsion (30) selon la revendication 1 ou 2, **caractérisé en ce qu'**un milieu de travail (63) constitué d'un milieu visqueux ou d'un gaz ou d'une combinaison d'un milieu visqueux et d'un gaz se trouve dans l'espace de travail (61) de l'unité de déplacement (6) et dans l'espace de travail (71) du cylindre récepteur (15).

4. Agencement d'amortissement d'oscillations de torsion (30) selon l'une quelconque des revendications précédentes, **caractérisé en ce que** l'agencement de masse de rotation (40) comprend une rigidité fixe (14) avec un accumulateur d'énergie (22), l'élément d'inertie primaire (4) pouvant tourner à l'encontre de l'action de l'accumulateur d'énergie (22) par rapport à l'élément d'inertie secondaire (5).

5. Agencement d'amortissement d'oscillations de torsion (30) selon la revendication 4, **caractérisé en ce que** l'accumulateur d'énergie (22) de l'agencement de masse de rotation (40) est disposé parallèlement ou en série par rapport à l'unité de déplacement (6).

6. Agencement d'amortissement d'oscillations de torsion (30) selon l'une quelconque des revendications 4 et 5, **caractérisé en ce que** l'accumulateur d'énergie de l'agencement de masse de rotation (40) est un élément déformable élastiquement ou un élément à gaz compressible.

7. Agencement d'amortissement d'oscillations de torsion (30) selon l'une quelconque des revendications précédentes, **caractérisé en ce que** l'espace de travail (61) de l'unité de déplacement (6) est en liaison fonctionnelle au moyen d'une conduite de liaison (8) avec un espace de travail (71) du cylindre récepteur (15).

8. Agencement d'amortissement d'oscillations de torsion (30) selon l'une quelconque des revendications précédentes, **caractérisé en ce que** la conduite de liaison (8) comprend un passage rotatif (9), le passage rotatif (9) reliant l'espace de travail (61) de l'unité de déplacement (6) pouvant tourner autour de l'axe de rotation A et l'espace de travail (71) du cylindre récepteur (15) solidaire en rotation par rapport à l'axe de rotation A de manière étanche aux liquides et/ou de manière étanche aux gaz et de manière à ce qu'ils puissent tourner l'un par rapport à l'autre.

9. Agencement d'amortissement d'oscillations de torsion (30) selon l'une quelconque des revendications précédentes, **caractérisé en ce que** l'agencement d'amortissement (50) comprend une pompe d'alimentation (12) et/ou un accumulateur de pression (11) et/ou une unité de régulation de commande (10), la pompe d'alimentation (12) et/ou l'accumulateur de pression (11) et/ou l'unité de régulation de commande (10) étant en liaison fonctionnelle avec l'espace de travail (71) du cylindre récepteur (15).

10. Agencement d'amortissement d'oscillations de torsion (30) selon l'une quelconque des revendications précédentes, **caractérisé en ce que** le cylindre récepteur (15) comprend un élément de ressort de charge (18), l'élément de ressort de charge (18) agissant à l'encontre d'une direction d'action d'une variation de volume V2 de l'espace de travail (71) du cylindre récepteur (15).

11. Agencement d'amortissement d'oscillations de torsion (30) selon l'une quelconque des revendications précédentes, **caractérisé en ce que** l'agencement de masse de rotation (40) comprend un module d'amortissement (20), le module d'amortissement étant en liaison fonctionnelle avec l'élément d'inertie primaire (4) ou avec l'élément d'inertie secondaire (5).
